# EUROPÄISCHE PATENTANMELDUNG

(11) **EP 4 420 901 A1**
(43) Veröffentlichungstag der Anmeldung: **28.08.2024**
(21) Anmeldenummer: 23158522.5
(22) Anmeldetag: 24.02.2023
(51) Int. Cl.: B60G 7/00, B60B 35/00, B60B 35/04, B60B 35/08, B60G 9/00

(54) **LÄNGSLENKER-ACHSANORDNUNG UND VERFAHREN ZU DEREN HERSTELLUNG**

(71) Anmelder: Schmitz Cargobull AG, 48341 Altenberge (DE)
(72) Erfinder: Schlichting, Timo, 48161 Münster (DE)
(74) Vertreter: Cohausz & Florack

(57) **Zusammenfassung**

Beschrieben und dargestellt ist eine Längslenker-Achsanordnung (12) für ein Nutzfahrzeug (1), insbesondere Lastkraftwagen, Anhänger oder Sattelauflieger, mit einem Achselement (14) und einem Längslenker (13) zum Verbinden mit einer Federeinrichtung, wobei der Längslenker (13) an wenigstens zwei in Längsrichtung des Achselements (14) voneinander beabstandeten Montageabschnitten (17) des Achselements (14) festgelegt ist. Damit eine stabile, zuverlässige, langlebig und zugleich leichte Längslenker-Achsanordnung bereitgestellt werden kann, ist vorgesehen, dass wenigstens zwei Blechelemente (15,16) des Längslenkers (13) in wenigstens einem Montageabschnitt (17) des Achselements (14) jeweils wenigstens im Wesentlichen umlaufend mit dem Achselement (14) verschweißt sind.

## Beschreibung

Die Erfindung betrifft eine Längslenker-Achsanordnung für ein Nutzfahrzeug, insbesondere Lastkraftwagen, Anhänger oder Sattelauflieger, mit einem Achselement und einem Längslenker zum Verbinden mit einer Federeinrichtung, wobei der Längslenker an wenigstens zwei in Längsrichtung des Achselements voneinander beabstandeten Montageabschnitten des Achselements festgelegt ist. Ferner betrifft die Erfindung ein Verfahren zur Fertigung einer solchen Längslenker-Achsanordnung.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Die Nutzfahrzeuge können Planenaufbauten aufweisen, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern. Im Gegensatz dazu sind bei sogenannten Kofferaufbauten die Seitenwände und das Dach durch feste Wände verschlossen. Zudem ist rückwärtig ein Türrahmen in Form eines Rückwandrahmens vorgesehen, an dem zwei Türen in Form von Rückwandtüren gehalten und in dem in der geschlossenen Stellung der Türen die Türen aufgenommen sein können. Gegenüber dem Rückwandrahmen ist eine Stirnwand vorgesehen. Dabei können entsprechende Stirnwände und Rückwände in gleicher Weise bei Planenaufbauten und bei Kofferaufbauten vorgesehen sein.

Die bekannten Nutzfahrzeuge weisen ein Chassis und ein an dem Chassis festgelegtes Fahrwerk mit einem oder mehreren Räderpaaren auf, die jeweils über eine Achse miteinander verbunden sind. Man spricht in diesem Zusammenhang auch von einachsigen, zweiachsigen oder dreiachsigen Nutzfahrzeugen. Ja nach Art des Nutzfahrzeugs können die Räderpaare dem vorderen oder dem hinteren Ende des Nutzfahrzeugs zugeordnet sein. Dies ist meist bei mehrachsigen Anhängern der Fall. Bei Sattelaufliegern sind die Räderpaare jedoch mit einem nicht unerheblichen Abstand zum vorderen sowie zum hinteren Ende des Nutzfahrzeugs vorgesehen. Von dem Fahrwerk wird eine Bodenstruktur getragen, die einen Ladeboden bereitstellen kann, auf den sich zu transportierende Ladung aufstellen lässt. Im Falle von sogenannten Kipperfahrzeugen, kann die Bodenstruktur eine Mulde tragen, in der Schüttgut transportiert werden kann.

Die Achsen entsprechender Nutzfahrzeuge weisen typischerweise ein Achselement in Form eines Achsrohrs auf, an dem den beiden Längsenden des Achsrohrs zugeordnet zwei Längslenker montiert sind. Diese dienen der Montage der Achse und der Federung des Fahrzeugs, wobei die Längslenker an einem Längsende bezogen auf das Nutzfahrzeug bzw. den Längslenker an einer Konsole des Chassis um eine Schwenkachse parallel zum Achsrohr schwenkbar montiert sind. Das andere Längsende des Längslenkers ist über eine Federeinrichtung mit dem Chassis verbunden. Dabei kommen bei entsprechenden Nutzfahrzeugen insbesondere eine Luftfederung mit einem sogenannten Rollbalg zur Anwendung. Um die Schwingungen von Achse und Fahrzeug zu dämpfen, ist das Achsrohr ferner über einen Stoßdämpfer am Chassis festgelegt.

Die Verbindung zwischen Achsrohr und Längslenker ist bei den Nutzfahrzeugen großen Belastungen ausgesetzt und muss daher sehr stabil, zuverlässig und langlebig ausgestaltet werden. Gleichzeitig soll die Verbindung aber auch nicht zu schwer sein. Bislang werden beispielsweise Längslenker mit U-Bügeln verwendet, die um das Achsrohr gelegt und mittels eines Querstegs mit dem Achsrohr verschraubt werden. Es sind aber auch Längslenker bekannt, die mit dem Achsrohr und/oder mit einer mit dem Achsrohr verpressten Manschette verschweißt sind. In den genannten Fällen sind in Längsrichtung des Achselements typischerweise zwei voneinander beabstandete Montageabschnitte vorgesehen, um die Kräfte vom Achselement an den Längslenker abzuleiten. In jedem Montageabschnitt kann beispielsweise ein U-Bügel oder eine Schweißnaht vorgesehen sein. Dabei sind die Montageabschnitte in Längsrichtung des Achselements seitlichen Rändern des Längslenkers zugeordnet, um Spannungsspitzen im Achselement zu vermeiden. Keine der bekannten Längslenker-Achsanordnungen ist jedoch in allen Belangen als zufriedenstellend anzusehen, so dass vorliegend weiterer Optimierungsbedarf besteht.

Daher liegt der vorliegenden Erfindung die Aufgabe zugrunde, die Längslenker-Achsanordnung und das Verfahren, jeweils der eingangs genannten und zuvor näher beschriebenen Art derart auszugestalten oder weiterzubilden, dass eine stabile, zuverlässige, langlebig und zugleich leichte Längslenker-Achsanordnung bereitgestellt werden kann.

Diese Aufgabe ist bei einer Längslenker-Achsanordnung gemäß dem Oberbegriff des Anspruchs 1 dadurch gelöst, dass wenigstens zwei Blechelemente des Längslenkers in wenigstens einem Montageabschnitt des Achselements jeweils wenigstens im Wesentlichen umlaufend mit dem Achselement verschweißt sind.

Die genannte Aufgabe ist ferner gemäß Anspruch 10 gelöst durch ein Verfahren zur Fertigung einer Längslenker-Achsanordnung nach einem der Ansprüche 1 bis 9, bei dem wenigstens drei, insbesondere wenigstens vier, Blechelemente des Längslenkers jeweils mit einer Durchgangsöffnung auf ein Achselement aufgeschoben und in zwei in Längsrichtung des Achselements voneinander beabstandeten Montageabschnitten wenigstens umlaufend mit dem Achselement verschweißt werden.

Durch das Verschweißen von wenigstens zwei Blechelementen des Längslenkers in wenigstens einem von mehreren Montageabschnitten kann eine besonders stabile, zuverlässige und langlebige Verbindung zwischen dem Achselement und dem Längsträger erreicht werden. Die Montageabschnitte des Achselements sind dabei voneinander beabstandet, um Spannungsspitzen im Achselement zu vermeiden. Die belasteten Bereiche des Achselements werden mithin über einen größeren Teilbereich des Achselements verteilt. Die in einem Montageabschnitt anfallenden Belastungen werden zudem auf die Verbindung des Achselements mit zwei Blechelementen verteilt, so dass die Stabilität der Verbindung des Achselements mit dem Längsträger insgesamt weiter erhöht wird, ohne dass dies einen übermäßig erhöhten Materialeinsatz nach sich ziehen würde. An dem wenigstens einen weiteren Montageabschnitt kann der Längslenker in einer anderen oder bevorzugt in gleicher Weise mit dem Achselement verbunden sein.

Bei dem Achselement handelt es sich vorzugsweise um ein solches, das sich wenigstens von einem Längslenker an einer Längsseite des Achselements zu einem anderen Längslenker an der anderen Längsseite des Achselements erstreckt. Das Achselement kann dabei zwischen den Längslenkern einen gleichartigen oder konstanten Querschnitt aufweisen und/oder geradlinig verlaufen. Dies ist alles einfach und daher bevorzugt. Gleichwohl ist nichts davon zwingend. In einer besonders bevorzugten Ausgestaltung der Längslenker-Achsanordnung ist das Achselement als Achsrohr mit einem mehr oder weniger runden, insbesondere wenigstens im Wesentlichen konstanten, Querschnitt ausgebildet. Der Längslenker und das Achsrohr können dann über wenigstens im Wesentlichen kreisförmig umlaufende Schweißverbindungen verbunden sein, bei denen es umlaufend mithin nicht zu besonderen Spannungs- oder Belastungsspitzen kommt. Das Achselement kann aber auch in einer anderen Form, etwa mit einem rechteckigen oder quadratischen Querschnitt ausgebildet sein, auch wenn dies aus den genannten Gründen wohl nur in besonderen Fällen bevorzugt sein wird.

Nachfolgend werden die Längslenker-Achsanordnung und das Verfahren jeweils der zuvor beschriebenen Art der besseren Verständlichkeit halber und zur Vermeidung unnötiger Wiederholungen gemeinsam beschrieben, ohne jeweils im Einzelnen stets zwischen der Längslenker-Achsanordnung und dem Verfahren zu unterscheiden. Für den Fachmann ergibt sich jedoch anhand des Kontextes, welches Merkmal in Bezug auf die Längslenker-Achsanordnung und das Verfahren jeweils besonders bevorzugt ist.

Bei einer ersten besonders bevorzugten Längslenker-Achsanordnung sind die wenigstens zwei Blechelemente des wenigstens einen Montageabschnitts des Achselements in einem radialen Abstand zum Achselement miteinander verbunden. Auf diese Weise wird ein Hohlraum zwischen den beiden Blechelementen und dem Achselement geschaffen, welcher zu einer höheren Steifigkeit der Verbindung beiträgt. Außerdem kann so Material eingespart werden, da eines der Blechelemente sich lediglich zwischen dem Achselement und der Verbindung mit dem weiteren Blechelement desselben Montageabschnitts erstrecken muss. Die Verbindung der beiden Blechelemente kann zur weiteren Aussteifung wenigstens im Wesentlichen umlaufend um das Achselement erfolgen. Unabhängig davon trägt es zur Vereinfachung des Längslenkers bei, wenn die beiden Blechelemente desselben Montageelements wenigstens im Wesentlichen direkt miteinander verbunden werden. Als Verbindung bietet sich zur Kraftübertragung ganz grundsätzlich eine Schweißverbindung an.

Der Bereich zwischen wenigstens zwei Montageabschnitten des Achselements und des Längsträgers kann zweckmäßig dazu genutzt werden, dort eine Dämpferaufnahme mit dem Achselement zu verbinden, an der sich ein Dämpferelement festlegen lässt. Auch hier kann eine stabile und steife Verbindung bereitgestellt werden, wenn die Dämpferaufnahme mit dem Achselement verschweißt wird.

Um den Materialaufwand gering zu halten und dennoch eine hohe Steifigkeit des Längslenkers zu gewährleisten, kann es sich anbieten, wenn wenigstens ein Blechelement des wenigstens einen gemeinsamen Montageabschnitts von Achselement und Längslenker in Form eines Verstärkungsrings ausgebildet ist. Der Verstärkungsring kann dann mit einer verhältnismäßig geringen radialen Erstreckung ausgebildet und beispielsweise mit dem radialen Rand mit dem angrenzenden Blechelement verbunden, insbesondere verschweißt werden.

Alternativ oder zusätzlich kann auch wenigstens ein Blechelement des wenigstens einen Montageabschnitts des Achselements in Form eines sich in Längsrichtung des Längslenkers erstreckenden Schalenelements ausgebildet sein. Dann dient das Blechelement nicht nur dem Verbinden des Längslenkers mit dem Achselement, sondern kann das Blechelement zudem auch einen wenigstens erheblichen Teil einer Seitenwand des Längslenkers bilden. Auf diese Weise wird die Anzahl benötigter Bauteile zur Bildung des Längslenkers verringert.

Einfach und mit geringem Gewicht lässt sich der Längslenkers bilden, wenn jeweils wenigstens ein Blechelement von wenigstens zwei Montageabschnitten des Achselements in Form eines sich in Längsrichtung des Längslenkers erstreckenden Schalenelements ausgebildet ist. Dann kann jedes Schalenelement einen wenigstens erheblichen Teil einer Seitenwand des Längslenkers an gegenüberliegenden Seiten desselben bilden. Der Längslenker kann einfach und leicht in Form einer Art eines Kastenprofils ausgebildet sein. Dies lässt sich beispielsweise erreichen, indem wenigstens zwei Blechelemente in Form von Schalenelementen ausgebildet und untereinander mit einem Untergurt und/oder einem Obergurt verbunden werden, der sich in Längsrichtung des Längsträgers erstreckt und zum Einsparen von Gewicht bevorzugt aus einem Blech gefertigt ist. Eine Art Kastenprofil kann dabei erhalten werden, wenn die wenigstens zwei Blechelemente in Form der Schalenelemente an wenigstens zwei unterschiedlichen Montageabschnitten an dem Achselement montiert, insbesondere angeschweißt, sind. Ebenso wie es sich aus Steifigkeitsgründen anbietet, die Blechelemente in Form der Schalenelemente mit dem Achselement zu verschweißen, bietet es sich an, den Untergurt und/oder den Obergurt mit den wenigstens zwei Blechelementen in Form der Schalenelemente zu verschweißen.

Um Gewicht einzusparen, ohne die Steifigkeit des Längsträgers zu sehr zu mindern, kann es sich anbieten, wenn wenigstens ein Blechelement eines Montageabschnitts des Achselements in Form eines Schalenelements mit wenigstens einer Durchgangsöffnung versehen ist. Dabei kann der Rand der entsprechenden Durchgangsöffnung zur Erhöhung der Steifigkeit seitlich umgebogen sein. Alternativ oder zusätzlich kann aus dem genannten Grund aber auch der Untergurt und/oder der Obergurt wenigstens eine Durchgangsöffnung aufweisen. Auch diese Durchgangsöffnung kann dann zur Erhöhung der Steifigkeit an ihrem Rand umgebogen sein. Bei den Durchgangsöffnungen handelt es sich zudem grundsätzlich um solche, die vom Achselement beabstandet vorgesehen sind. Im Bereich des Achselements sind bevorzugt bei den Blechelementen zusätzliche Durchgangsöffnungen vorgesehen, die aber in erster Linie dem Aufschieben der Blechelemente auf das Achselement dienen.

Zur stabilen und steifen Anbindung des Längsträgers an eine Konsole des Chassis des Nutzfahrzeugs bietet es sich an, wenn wenigstens ein Blechelement eines Montageabschnitts des Achselements in Form eines Schalenelements, der Untergurt und/oder der Obergurt mit einer Buchse zur Montage des Längslenkers an einer Konsole des Chassis des Nutzfahrzeugs verbunden ist. Eine besondere Steifigkeit kann dabei erreicht werden, wenn die Buchse mit zwei Blechelementen in Form von Schalenelementen verbunden ist, welche ihrerseits wiederum mit unterschiedlichen Montageabschnitten des Achselements verbunden sind. Unabhängig davon wird die Buchse mit dem wenigstens einen Blechelement, dem Untergurt und/oder dem Obergurt aus Gründen der Steifigkeit und Einfachheit verschweißt.

Im Übrigen kann wenigstens ein Blechelement eines Montageabschnitts des Achselements in Form eines Schalenelements, der Untergurt und/oder der Obergurt einem Längsende des Längsträgers zugeordnet einen Montagebereich zur Montage der Federeinrichtung aufweisen oder bilden. Dies kann die Ausgestaltung des Längsträgers weiter vereinfachen. Dies gilt insbesondere dann, wenn der Montagebereich des Längsträgers einem der Buchse gegenüberliegenden Längsende des Längslenkers zugeordnet ist.

Um die Steifigkeit der Verbindung von Längslenker und Achselement zu erhöhen, bietet es sich zudem an, wenn in wenigstens zwei Montageabschnitten des Achselements insgesamt wenigstens drei Blechelemente des Längslenkers wenigstens im Wesentlichen umlaufend mit dem Achselement verschweißt sind. Es wird also nicht nur in einem Montageabschnitt des Längsträgers ein Blechelement mit dem Achselement verschweißt, sondern wenigstens in zwei unterschiedlichen Montageabschnitten des Längsträgers. Noch bessere Ergebnisse hinsichtlich der Steifigkeit lassen sich typischerweise dadurch erreichen, dass in wenigstens zwei Montageabschnitten des Achselements jeweils wenigstens zwei Blechelemente des Längslenkers wenigstens im Wesentlichen umlaufend mit dem Achselement verschweißt sind. Insoweit können die wenigstens zwei Montageabschnitte gleichartig ausgebildet sein, was auch die Montage vereinfachen kann.

Die Steifigkeit des Längslenkers kann auch dadurch verbessert werden, dass jeweils wenigstens zwei Blechelemente von wenigstens zwei unterschiedlichen Montageabschnitten des Achselements in einem radialen Abstand zum Achselement miteinander verbunden sind. So wird an den Montageabschnitten ein Hohlraum zwischen dem Achselement und den korrespondierenden Blechelementen der Montageabschnitte geschaffen, der zu einer lokalen Aussteifung beiträgt. Dies gilt insbesondere dann, wenn die korrespondierenden Blechelemente direkt miteinander verbunden und/oder miteinander verschweißt werden.

Wenn in den wenigstens zwei entsprechend ausgebildeten Montageabschnitten des Längslenkers jeweils ein Blechelement in Form eines Verstärkungsrings ausgebildet ist, kann dieses Blechelement materialschonend ausgebildet werden und sich so bedarfsweise nur bis in einen Bereich radial nach außen bezogen auf das Achselement erstrecken, in dem das Blechelement in Form des Verstärkungsrings mit dem weiteren Blechelement verbunden wird. Das letztgenannte wenigstens eine Blechelement der wenigstens zwei Montageabschnitte des Achselements kann dann bevorzugt in Form eines sich in Längsrichtung des Längslenkers erstreckenden Schalenelements ausgebildet sein. Die Blechelemente in Form der Schalenelemente können dann wenigstens einen erheblichen Teil der Seitenwände des Längslenkers bilden, um so beispielsweise eine einfache Struktur ähnlich eines Kastenprofils ausbilden zu können.

Die zuvor beschriebenen Vorteile kommen in besonderem Maße zum Tragen, wenn an der Achse an gegenüberliegenden Seiten jeweils ein Längslenker in der beschriebenen Art vorgesehen ist. Es können mit anderen Worten also bevorzugt zwei gleichartige Längslenker zum Verbinden mit jeweils einer Federeinrichtung vorgesehen sein, wobei die beiden Längslenker jeweils an wenigstens zwei in Längsrichtung des Achselements voneinander beabstandeten Montageabschnitten des Achselements festgelegt sind. Die Montageabschnitte sind dann zudem vorzugsweise unterschiedlichen Federeinrichtungen des Fahrwerks des Nutzfahrzeugs zugeordnet. Ferner sind jedenfalls jeweils wenigstens zwei Blechelemente jedes Längslenkers in wenigstens einem Montageabschnitt des Achselements jeweils wenigstens im Wesentlichen umlaufend mit dem Achselement verschweißt, um die erforderliche Steifigkeit der Längslenker bereitzustellen.

Bei einer ersten besonders bevorzugten Ausgestaltung des Verfahrens werden die wenigstens zwei Blechelemente wenigstens eines Montageabschnitts des Achselements in einem radialen Abstand zum Achselement miteinander verbunden. So lässt sich die Steifigkeit, insbesondere im Bereich des Montageabschnitts erhöhen. Dabei kann die Verbindung umlaufend und kreisförmig sein, beides ist aber nicht zwingend erforderlich. Es muss sich also bei dem radialen Abstand nicht um einen konstanten Abstand umlaufend um das Achselement handeln. Besonders einfach und zuverlässig ist es dabei, wenn die Blechelemente direkt miteinander verbunden werden. Unabhängig davon ist es aus Steifigkeitsgesichtspunkten zweckmäßig, die beiden Blechelemente miteinander zu verschweißen.

Alternativ oder zusätzlich kann der Raum zwischen den wenigstens zwei Montageabschnitten des Längslenkers zweckmäßig genutzt werden, wenn dort, also zwischen den wenigstens zwei Montageabschnitten des Achselements, eine Dämpferaufnahme zum Verbinden mit einem Dämpferelement mit dem Achselement verbunden wird. Auch in diesem Falle ist es zur Bereitstellung einer hohen Steifigkeit zweckmäßig, wenn die Dämpferaufnahme und das Achselement miteinander verschweißt werden.

Zur Vereinfachung der Fertigung kann wenigstens ein Blechelement wenigstens eines Montageabschnitts des Achselements in Form eines Verstärkungsrings ausgebildet sein, während wenigstens ein anderes Blechelement des Montageabschnitts in Form eines sich in Längsrichtung des Längslenkers erstreckenden Schalenelements ausgebildet ist. Diese beiden unterschiedlichen Blechelemente können dann miteinander verbunden, insbesondere verschweißt, werden, und zwar in einem radialen Abstand zu dem Achselement. Dieser radiale Abstand kann aus Stabilitäts- und Fertigungsgründen zwischen 10 mm und 150 mm, vorzugsweise zwischen 20 mm und 100 mm, insbesondere zwischen 30 mm und 70 mm betragen. Dies vereinfacht den Längslenker ebenso wie dessen Fertigung. Noch zweckmäßiger ist es in diesem Falle, wenn wenigstens zwei Blechelemente in Form der Schalenelemente von mehreren Montageabschnitten des Längslenkers mit einem sich in Längsrichtung des Längslenkers erstreckenden Untergurt und/oder Obergurt verbunden werden. Auch hierbei ist es einfach und stabil, wenn die Schalenelemente mit dem Untergurt und/oder Obergurt verschweißt werden. Nicht nur dazu bietet es sich grundsätzlich an, wenn der Untergurt und/oder Obergurt aus Blech gebildet sind. Durch den Untergurt und/oder Obergurt sind dann vorzugsweise die wenigstens zwei Blechelemente in Form der Schalenelemente untereinander verbunden.

Das wenigstens eine Blechelement eines Montageabschnitts des Achselements in Form eines Schalenelements, der Untergurt und/oder der Obergurt kann zudem mit einer Buchse zur Montage des Längslenkers an einer Konsole des Chassis des Nutzfahrzeugs verbunden werden. So lässt sich einfach eine stabile Anbindung des Längslenkers an das Chassis des Nutzfahrzeugs bereitstellen. Die gilt zudem insbesondere dann, wenn die Buchse mit dem wenigstens einen Blechelement, dem Untergurt und/oder dem Obergurt verschweißt wird.

Die zuvor genannten Vorteile kommen insbesondere dann zum Tragen, wenn zwei gleichartige Längslenker zum Verbinden mit jeweils einer Federeinrichtung beabstandet voneinander an dem Achselement montiert werden. Die beiden Längsträger sind dann insbesondere gegenüberliegenden Längsenden des Achselements, gegenüberliegenden Federeinrichtungen des Fahrwerks und/oder gegenüberliegenden Rädern des Nutzfahrzeugs zugeordnet.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit einer erfindungsgemäßen Längslenker-Achsanordnung in einer perspektivischen Ansicht,
- Fig. 2: ein Detail eines aus dem Stand der Technik bekannten luftgefederten Fahrwerks eines Nutzfahrzeugs in einer Schnittansicht quer zur Längserstreckung einer Achse,
- Fig. 3A-F: die erfindungsgemäße Längslenker-Achsanordnung während unterschiedlicher Phasen von deren Fertigung in einer perspektivischen Ansicht und
- Fig. 4: ein Detail der erfindungsgemäßen Längslenker-Achsanordnung in einer Schnittansicht längs zum Achselement gemäß der Schnitteben IV-IV aus Fig. 3F.

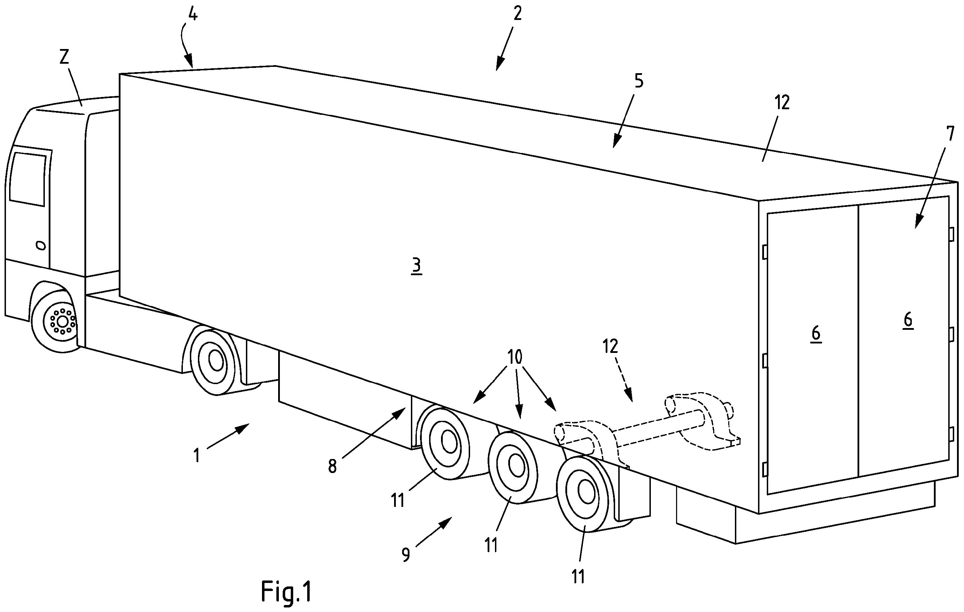

In der Fig. 1 ist ein von einer Zugmaschine Z gezogenes Nutzfahrzeug 1 in Form eines Sattelaufliegers dargestellt. Das dargestellte und insoweit bevorzugte Nutzfahrzeug weist dabei einen Kofferaufbau 2 mit Seitenwänden 3, einer Stirnwand 4, einem Dach 5 und Rückwandtüren 6 einer Rückwand 7 auf. Der Kofferaufbau 2 wird von einem Chassis 8 des Nutzfahrzeugs 1 getragen, an dem ein dreiachsiges Fahrwerk 9 vorgesehen ist. Jede der drei Achsen 10 trägt den beiden Seiten des Nutzfahrzeugs 1 zugeordnete Räder 11 und kann gegenüber dem Chassis 8 ein- und wieder ausfedern. Zu diesem Zweck sind die Achsen 10 des dargestellten und insoweit bevorzugten Nutzfahrzeugs 1 luftgefedert und mit einer Längsträger-Achsanordnung 12 am Chassis festgelegt.

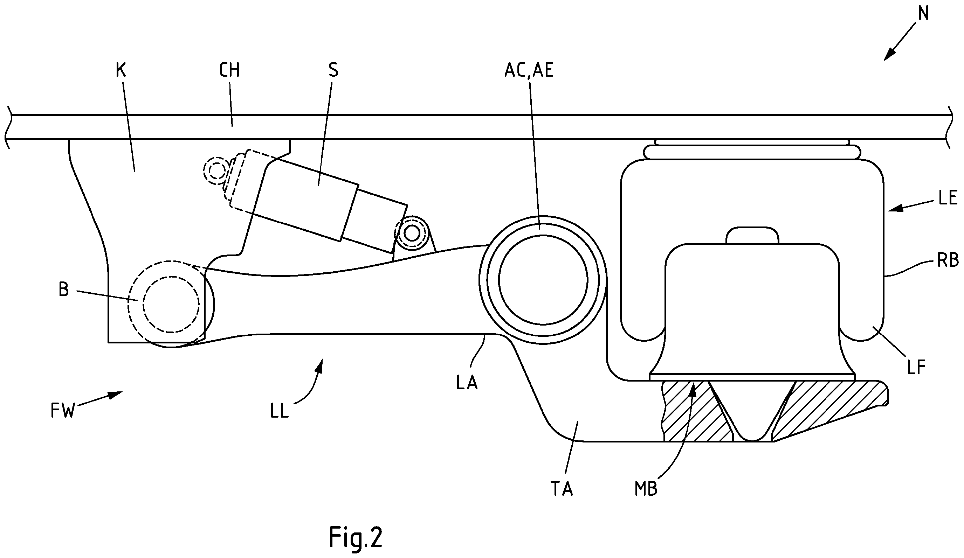

Ein Detail eines aus dem Stand der Technik bekannten luftgefederten Fahrwerks FW ist in der Fig. 2 dargestellt. Das Fahrwerk FW ist an dem Chassis CH des Nutzfahrzeugs N montiert, wobei die dargestellte Achse AC über eine Konsole K und über eine Federeinrichtung FE in Form einer Luftfeder LF mit einem Rollbalg RB an dem Chassis CH angebunden ist. Zudem ist die in einem Schnitt dargestellte Achse AC über einen Längslenker LL mit der Konsole K und mit der Luftfedereinrichtung FE verbunden. Der Längslenker LL weist dazu einen Lenkerarm LA und einen Tragarm TA auf, die sich ausgehend von der Achse AC in der Längsrichtung des Nutzfahrzeugs N in entgegengesetzte Richtungen erstrecken. An dem von der Konsole K abgewandten Ende des Längslenkers LL ist ein Montagebereich MB für die Montage mit der Federeinrichtung FE vorgesehen, während an dem gegenüberliegenden Ende des Längslenkers LL eine Buchse B vorgesehen ist, mit welcher der Längslenker LL an der Konsole K montiert ist. Die Verbindung zwischen der Konsole K und der Buchse B ist schwenkbar ausgebildet, so dass der Längslenker LL mitsamt der Achse AC gegenüber dem Chassis CH und der Federeinrichtung FE ein- und wieder ausfedern kann. Beim Einfedern wird der Rollbalg RB der Federeinrichtung FE zusammengedrückt und beim Ausfedern wieder auseinandergezogen. Damit das Ein- und Ausfedern der Achse AC hinreichend gedämpft werden kann, ist ein an sich bekannter Stoßdämpfer S vorgesehen, welcher mit einem Ende an dem Längslenker LL und mit dem anderen Ende mit der Konsole K verbunden ist. Nicht im Einzelnen dargestellt ist, dass die Achse AC ein Achselement AE in Form eines Achsrohrs aufweist, das sich zwischen zwei Längslenkern LL und zu beiden Seiten darüber hinaus nach außen erstreckt. Jeder der beiden Längslenker LL ist dabei einer Seite des Nutzfahrzeugs N und wenigstens einem dort vorgesehenen Rad zugeordnet. Die Achse AC ist also durch die seitlichen Längslenker LL mit dem Chassis CH des Nutzfahrzeugs N verbunden.

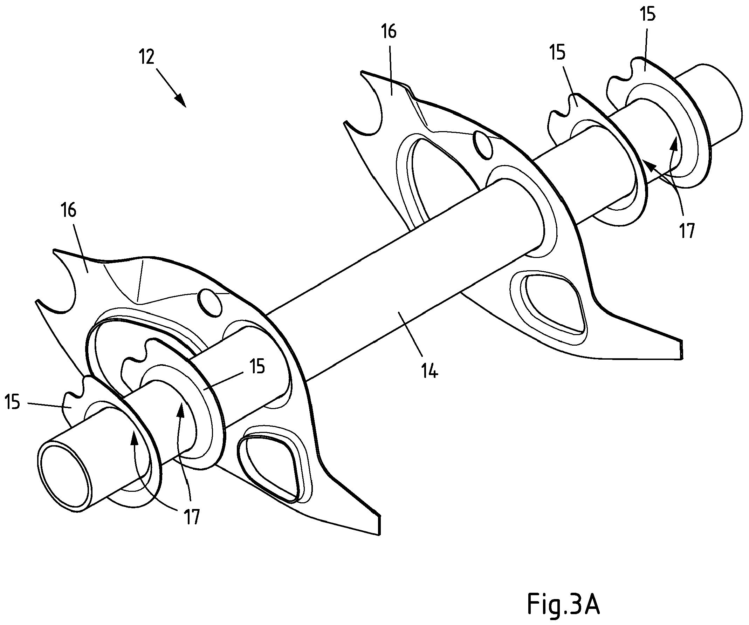

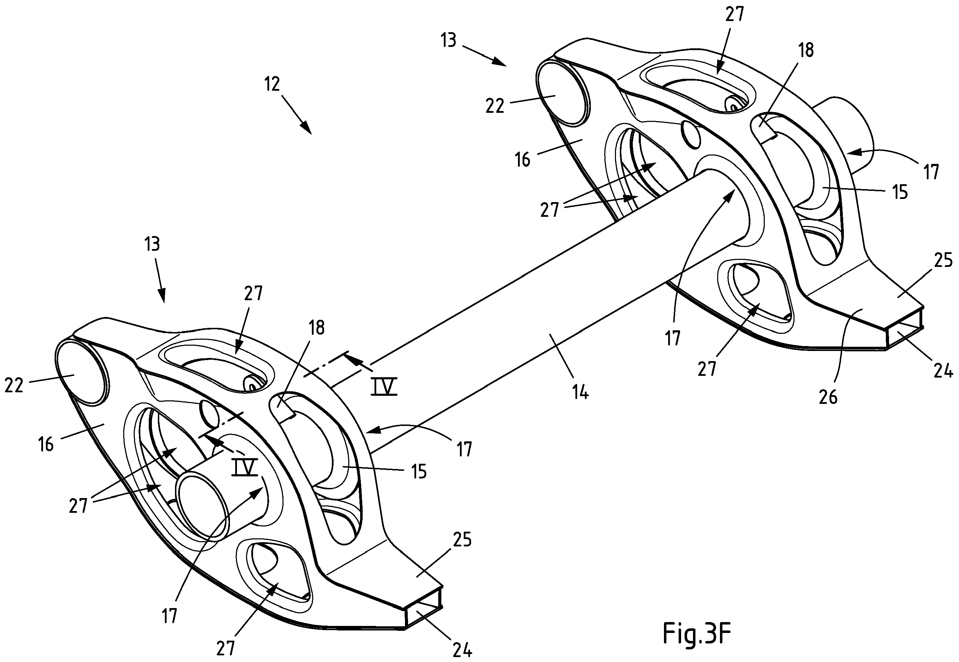

In den Fig. 3A-F ist die Längslenker-Achsanordnung 12 während deren Fertigung dargestellt, wobei sich die Längslenker-Achsanordnung 12 im Wesentlichen durch die Ausgestaltung des Längslenkers 13 von der Längslenker-Achsanordnung gemäß Fig. 2 unterscheidet.

Bei dem dargestellten und insoweit bevorzugten Verfahren wird gemäß Fig. 3A ein Achselement 14 in Form eines Achsrohrs verwendet, das einen kreisförmigen Querschnitt aufweist und sich geradlinig zwischen zwei Längslenkern 13 erstreckt, die gegenüberliegenden Enden des Achselements 14 zugeordnet sind. Auf das Achselement 14 werden zunächst Blechelemente 15,16 aufgeschoben. Bei dem dargestellten und insoweit bevorzugten Verfahren handelt es sich dabei pro Längslenker 13 zunächst um jeweils drei Blechelemente 15,16, die unterschiedlichen Montageabschnitten 17 betreffend die jeweiligen Längslenker 13 und das Achselement 14 zugeordnet werden. An jedem Montageabschnitt 17 ist ein Blechelement 15 umlaufend mit dem Achselement 14 verschweißt. Diese Blechelemente 15 sind gleichartig zueinander ausgebildet. Die inneren ebenfalls gleichartig zueinander ausgebildeten Blechelemente 16 sind dagegen lediglich auf das Achselement 14 aufgeschoben aber noch nicht an diesem festgelegt.

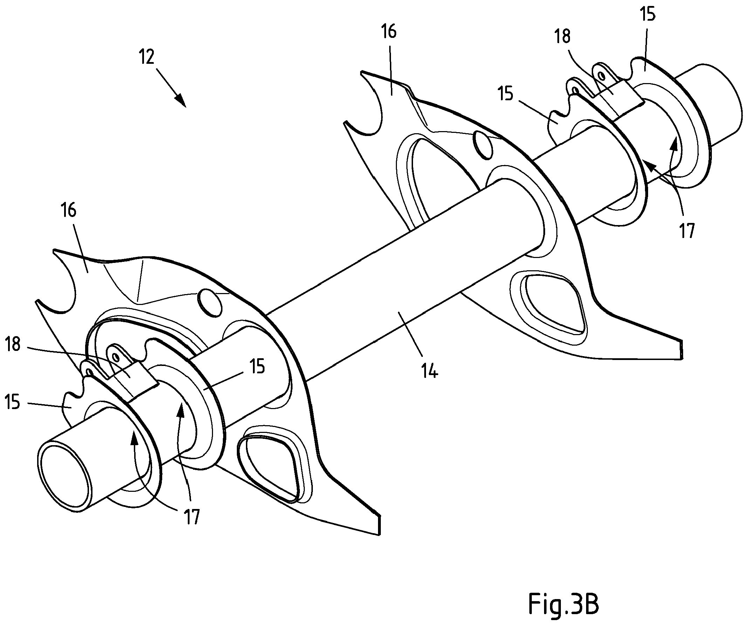

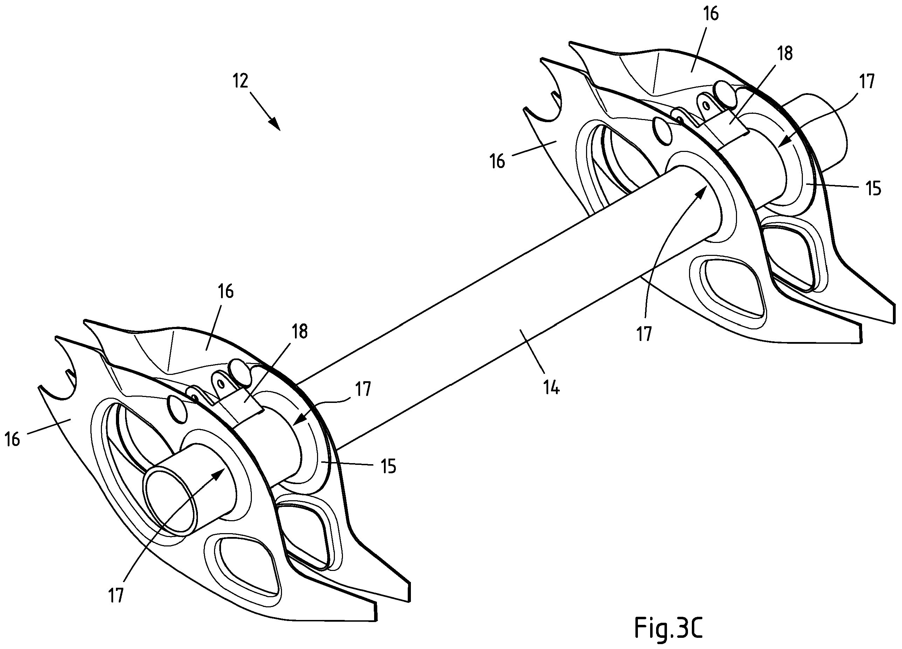

In der Fig. 3B ist dargestellt, dass zwischen den Montageabschnitten 17 eines jeden Längslenkers 13, mithin zwischen jeweils zwei der bereits verschweißten Blechelemente 15 des Längslenkers 13 eine Dämpferaufnahme 18 zum Verbinden mit einem Dämpferelement mit dem Achselement 14 verschweißt wird. Anschließend werden zwei weitere äußere Blechelemente 16 auf das Achselement 14 aufgeschoben, die mit den beiden inneren Blechelementen 16 gleichartig ausgebildet sind. Die inneren Blechelemente 16 und die äußeren Blechelemente 16 werden, wie dies in der Fig. 3C dargestellt ist, an die bereits in den Montageabschnitten 17 mit dem Achselement 14 verschweißten Blechelemente 15 herangeschoben und in diesen Positionen ebenfalls umlaufend mit dem Achselement 14 verschweißt.

Auf diese Weise werden pro Längslenker 13 zwei Montageabschnitte 17 mit jeweils zwei umlaufend verschweißten Blechelementen 15,16 geschaffen. Die Blechelemente 15,16 eines jeden Montageabschnitts 17 unterscheiden sich dabei grundlegend voneinander. Ein bei der dargestellten und insoweit bevorzugten Längsträger-Achsanordnung 12 gesehen von der Dämpferaufnahme 18 äußeres Blechelement 16 ist in Form eines Schalenelements ausgebildet, das später wenigstens einen wesentlichen Teil einer Seitenwand des Längslenkers 12 bildet, während das andere Blechelement 15, das mithin der Dämpferaufnahme 18 zugeordnet ist, in Form eines Verstärkungsrings ausgebildet ist. Diese Blechelemente dienen dann hauptsächlich dem Aussteifen der Verbindung zwischen dem Achselement 14 und dem Längslenker 13 in den entsprechenden Montageabschnitten 17.

Die beiden Blechelemente 15,16 eines jeden Montageabschnitts 17 gelangen wenigstens nahezu in Anlage aneinander, um sodann im entsprechenden Kontaktbereich miteinander verschweißt zu werden. Auch diese Schweißverbindung 19 kann wenigstens im Wesentlichen umlaufend um das Achselement 14 erfolgen. Die wenigstens im Wesentlichen umlaufende Schweißverbindung 19 zwischen den Blechelementen 15,16 erfolgt jedoch in einem radialen Abstand zum Achselement 14. Zudem erfolgt die wenigstens im Wesentlichen umlaufende Schweißverbindung 19 zwischen den Blechelementen 15,16 eines Montageabschnitts 17 bei dem dargestellten und insoweit bevorzugten Verfahren durch eine Vielzahl von Schweißpunkten, während die Schweißverbindungen 20,21 zwischen den Blechelementen 15,16 der Montageabschnitte 17 mit dem Achselement 14 durch umlaufende, durchgehende Schweißnähte gebildet werden. Unabhängig davon sind die Blechelemente 15,16 so geformt, dass die Blechelemente 15,16 eines Montageelements 17 in der Verbindung mit dem Achselement 14 in Längsrichtung des Achselements 14 voneinander beabstandet sind.

Die zuvor beschriebene Reihenfolge, in der die Blechelemente 15,16 und die Dämpferaufnahme 18 mit dem Achselement 14 sowie die Blechelemente 15,16 untereinander verschweißt werden, ist grundsätzlich bevorzugt. Dies bedeutet aber nicht, dass diese Reihenfolge zwingend eingehalten werden muss. Die Schweißverbindungen 19-21 könnten auch in einer anderen Reihenfolge erfolgen.

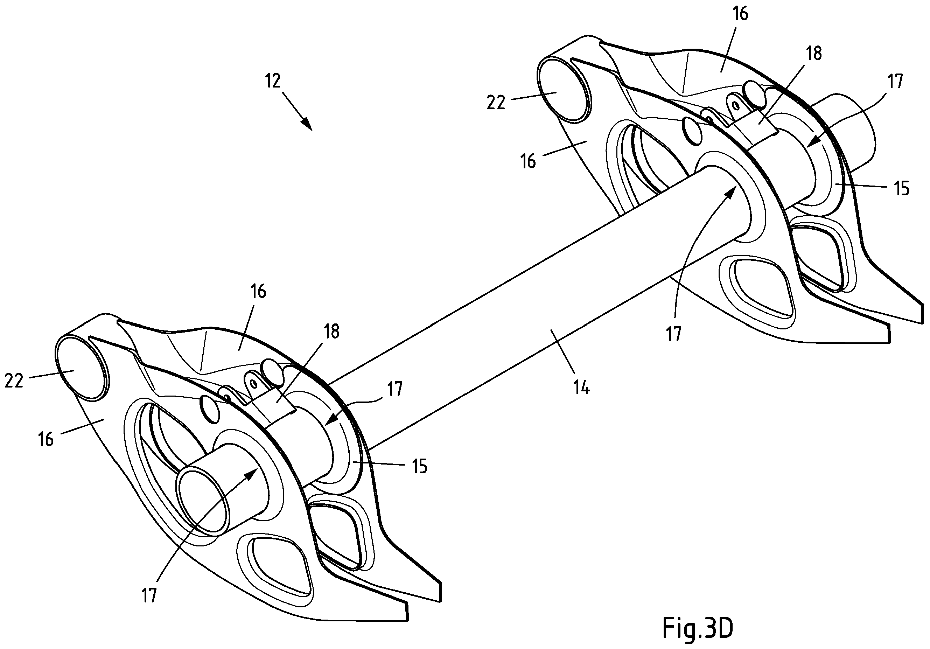

Nachdem die Blechelemente 15,16 mit dem Achselement 14 sowie untereinander verschweißt worden sind, wird mit den in Form von Schalenelementen ausgebildeten Blechelementen 16 eines jeden Längsträgers eine Buchse 22 verschweißt, mit der die Längslenker 13 mit korrespondierenden Konsolen des Chassis schwenkbar verbunden werden können. Dies ist in der Fig. 3D dargestellt.

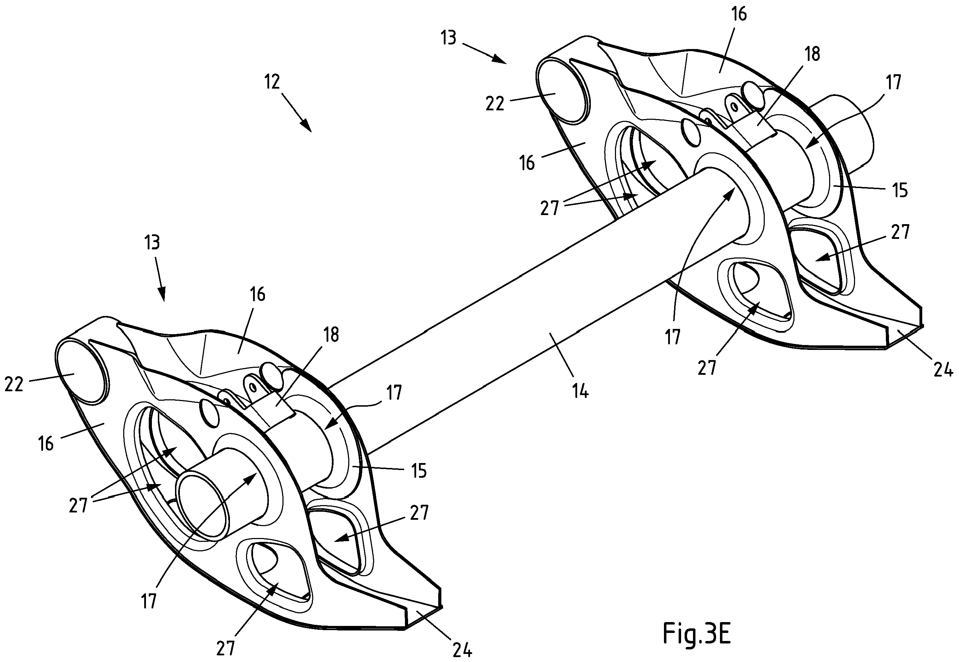

Wie in den Fig. 3E-F dargestellt ist, werden die in Form von Schalenelementen ausgebildeten Blechelemente 16 sowie die Buchse 22 eines jeden Längslenkers 13 mit einem Untergurt 24 und einem Obergurt 25 verschweißt. Die Untergurte 24 und die Obergurte 25 verbinden mithin ebenso wie die Buchse 22 die beiden als Schalenelemente ausgebildeten Blechelemente 16 eines jeden Längslenkers 13 untereinander. Zudem bildet der Obergurt 25 jeweils einen Montagebereich 26 zur Montage einer Federeinrichtung, mit der die Längslenker-Achsanordnung 12 an das Chassis 8 des Nutzfahrzeugs 1 angebracht wird. In den fertigen Längslenker-Achsanordnungen 12 sind in den als Schalenelemente ausgebildeten Blechelementen 16 sowie in den Untergurten 24 und den Obergurten 25 Durchgangsöffnungen 27 vorgesehen. Die Durchgangsöffnungen 27 weisen stets einen umlaufenden nach innen umgebogenen, das entsprechende Blechteil 16,24,25 aussteifenden Rand auf. Die fertigen Längslenker 13 sind mithin nach Art eines Kastenprofils gebildet.

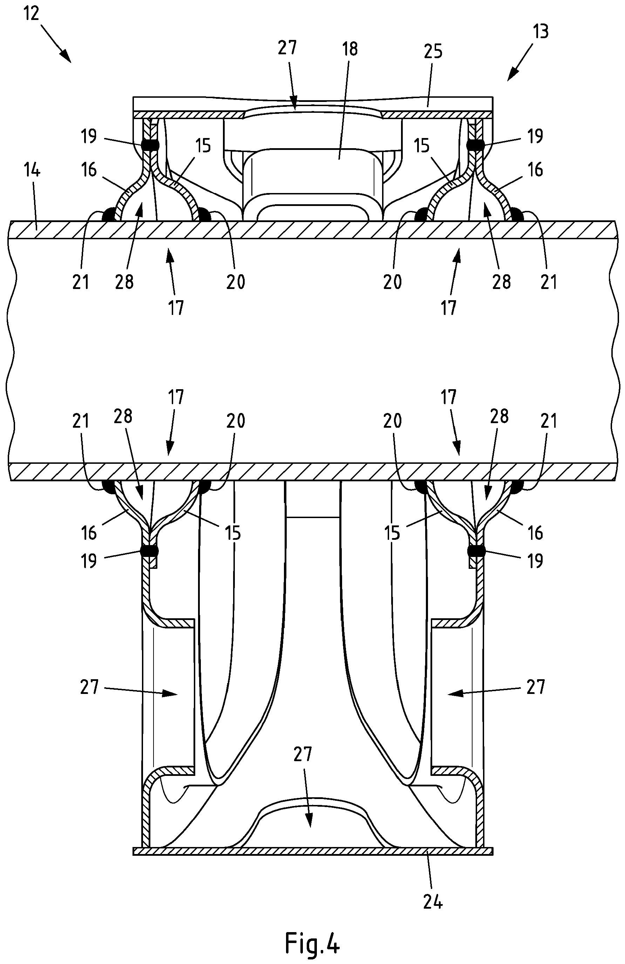

In der Fig. 4 ist eine Schnittansicht der Längslenker-Achsanordnung 12 längs zum Achselement 14 und quer zum Längslenker 13 dargestellt. In den Montageabschnitten 17 sind die Blechelemente 15,16 jeweils in Längsrichtung des Achselements 14 voneinander beabstandet mit dem Achselement 14 und in einem radialen Abstand zu dem Achselement 14 über Schweißverbindungen 19-21 miteinander verschweißt. Die Blechelemente 15,16 eines Montageabschnitts 17 und das Achselement 14 bilden mithin in den Montageabschnitten 17 jeweils Hohlräume 28 aus, die eine steife Anbindung der Längslenker 13 an das Achselement 14 sicherstellen.

### Bezugszeichenliste

- 1: Nutzfahrzeug
- 2: Kofferaufbau
- 3: Seitenwand
- 4: Stirnwand
- 5: Dach
- 6: Rückwandtüren
- 7: Rückwand
- 8: Chassis
- 9: Fahrwerk
- 10: Achse
- 11: Rad
- 12: Längsträger-Achsanordnung
- 13: Längslenker
- 14: Achselement
- 15: Blechelement (Verstärkungsring)
- 16: Blechelement (Schalenelement)
- 17: Montageabschnitte
- 18: Dämpferaufnahme
- 19: Schweißverbindung (Blechelemente)
- 20: Schweißverbindung (Verstärkungselement)
- 21: Schweißverbindung (Schalenelement)
- 22: Buchse
- 24: Untergurt
- 25: Obergurt
- 26: Montagebereich
- 27: Durchgangsöffnung
- 28: Hohlraum
- AC: Achse
- AE: Achselement
- B: Buchse
- CH: Chassis
- FE: Federeinrichtung
- FW: Fahrwerk
- K: Konsole
- LA: Lenkerarm
- LF: Luftfeder
- LL: Längslenker
- MB: Montagebereich
- N: Nutzfahrzeug
- RB: Rollbalg
- S: Stoßdämpfer
- TA: Tragarm
- Z: Zugmaschine

## Patentansprüche

1. Längslenker-Achsanordnung (12) für ein Nutzfahrzeug (1), insbesondere Lastkraftwagen, Anhänger oder Sattelauflieger, mit einem Achselement (14) und einem Längslenker (13) zum Verbinden mit einer Federeinrichtung, wobei der Längslenker (13) an wenigstens zwei in Längsrichtung des Achselements (14) voneinander beabstandeten Montageabschnitten (17) des Achselements (14) festgelegt ist,
**dadurch gekennzeichnet, dass** wenigstens zwei Blechelemente (15,16) des Längslenkers (13) in wenigstens einem Montageabschnitt (17) des Achselements (14) jeweils wenigstens im Wesentlichen umlaufend mit dem Achselement (14) verschweißt sind.

2. Längslenker-Achsanordnung nach Anspruch 1,
**dadurch gekennzeichnet, dass** die wenigstens zwei Blechelemente (15,16) des wenigstens einen Montageabschnitts (17) des Achselements (14) in einem radialen Abstand zum Achselement (14), insbesondere direkt, miteinander verbunden, insbesondere verschweißt, sind und/oder dass zwischen den wenigstens zwei Montageabschnitten (17) des Achselements (14) eine Dämpferaufnahme (18) zum Verbinden mit einem Dämpferelement mit dem Achselement (14) verbunden, insbesondere verschweißt, ist.

3. Längslenker-Achsanordnung nach Anspruch 1 oder 2,
**dadurch gekennzeichnet, dass** wenigstens ein Blechelement (15) des wenigstens einen Montageabschnitts (17) des Achselements (14) in Form eines Verstärkungsrings ausgebildet ist und/oder wenigstens ein Blechelement (16) des wenigstens einen Montageabschnitts (17) des Achselements (14) in Form eines sich in Längsrichtung des Längslenkers (13) erstreckenden Schalenelements ausgebildet ist.

4. Längslenker-Achsanordnung nach Anspruch 3,
**dadurch gekennzeichnet, dass** jeweils wenigstens ein Blechelement (16) von wenigstens zwei Montageabschnitten (17) des Achselements (14) in Form eines sich in Längsrichtung des Längslenkers (13) erstreckenden Schalenelements ausgebildet ist und dass, vorzugsweise, die wenigstens zwei Blechelemente (16) mehrerer Montageabschnitte (17) des Achselements (14) in Form der Schalenelemente mit einem sich in Längsrichtung des Längslenkers (13) erstreckenden, insbesondere aus einem Blech gebildeten, Untergurt (24) und/oder Obergurt (25) verbunden, insbesondere verschweißt, sind.

5. Längslenker-Achsanordnung nach Anspruch 3 oder 4,
**dadurch gekennzeichnet, dass** wenigstens ein Blechelement (16) eines Montageabschnitts (17) des Achselements (14) in Form eines Schalenelements, der Untergurt (24) und/oder der Obergurt (25) wenigstens eine vom Achselement (14) beabstandete Durchgangsöffnung (27) aufweisen und/oder dass wenigstens ein Blechelement (16) eines Montageabschnitts (17) des Achselements (14) in Form eines Schalenelements, der Untergurt (24) und/oder der Obergurt (25) mit einer Buchse (22) zur Montage des Längslenkers (13) an einer Konsole des Chassis (8) des Nutzfahrzeugs (1) verbunden, insbesondere verschweißt, ist und/oder dass wenigstens ein Blechelement (16) eines Montageabschnitts (17) des Achselements (14) in Form eines Schalenelements, der Untergurt (24) und/oder der Obergurt (25), insbesondere an der der Buchse (22) gegenüberliegenden Seite des Längslenkers (13) einen Montagebereich (26) zur Montage der Federeinrichtung aufweist.

6. Längslenker-Achsanordnung nach einem der Ansprüche 1 bis 5,
**dadurch gekennzeichnet, dass** in wenigstens zwei Montageabschnitten (17) des Achselements (14) insgesamt wenigstens drei Blechelemente (15,16) des Längslenkers (13) wenigstens im Wesentlichen umlaufend mit dem Achselement (14) verschweißt sind und, vorzugsweise, in wenigstens zwei Montageabschnitten (17) des Achselements (14) jeweils wenigstens zwei Blechelemente (15,16) des Längslenkers (13) wenigstens im Wesentlichen umlaufend mit dem Achselement (14) verschweißt sind.

7. Längslenker-Achsanordnung nach Anspruch 6,
**dadurch gekennzeichnet, dass** die jeweils wenigstens zwei Blechelemente (15,16) der wenigstens zwei Montageabschnitte (17) des Achselements (14) in einem radialen Abstand zum Achselement (14), insbesondere direkt, miteinander verbunden, insbesondere verschweißt, sind.

8. Längslenker-Achsanordnung nach Anspruch 6 oder 7,
**dadurch gekennzeichnet, dass** jeweils wenigstens ein Blechelement (15) der wenigstens zwei Montageabschnitte (17) des Achselements (14) in Form eines Verstärkungsrings ausgebildet sind und/oder jeweils wenigstens ein Blechelement (16) der wenigstens zwei Montageabschnitte (17) des Achselements (14) in Form eines sich in Längsrichtung des Längslenkers (13) erstreckenden Schalenelements ausgebildet ist.

9. Längslenker-Achsanordnung nach einem der Ansprüche 1 bis 8,
**dadurch gekennzeichnet, dass** zwei gleichartige Längslenker (13) zum Verbinden mit jeweils einer Federeinrichtung vorgesehen sind, dass die Längslenker (13) jeweils an wenigstens zwei in Längsrichtung des Achselements (14) voneinander beabstandeten Montageabschnitten (26) des Achselements (14) festgelegt sind und dass jeweils wenigstens zwei Blechelemente (15,16) jedes Längslenkers (13) in wenigstens einem Montageabschnitt (17) des Achselements (14) jeweils wenigstens im Wesentlichen umlaufend mit dem Achselement (14) verschweißt sind.

10. Verfahren zur Fertigung einer Längslenker-Achsanordnung (12) nach einem der Ansprüche 1 bis 9,
- bei dem wenigstens drei, insbesondere wenigstens vier, Blechelemente (15,16) des Längslenkers (13) jeweils mit einer Durchgangsöffnung auf ein Achselement (14) aufgeschoben und in zwei in Längsrichtung des Achselements (14) voneinander beabstandeten Montageabschnitten (17) wenigstens umlaufend mit dem Achselement (14) verschweißt werden.

11. Verfahren nach Anspruch 10,
- bei dem die wenigstens zwei Blechelemente (15,16) wenigstens eines Montageabschnitts (17) des Achselements (14) in einem radialen Abstand zum Achselement (14), insbesondere direkt, miteinander verbunden, insbesondere verschweißt, werden und/oder
- bei dem zwischen den wenigstens zwei Montageabschnitten (17) des Achselements (14) eine Dämpferaufnahme (18) zum Verbinden mit einem Dämpferelement mit dem Achselement (14) verbunden, insbesondere verschweißt, wird.

12. Verfahren nach Anspruch 10 oder 11,
- bei dem wenigstens ein Blechelement (15) wenigstens eines Montageabschnitts (17) des Achselements (14) in Form eines Verstärkungsrings und wenigstens ein Blechelement (16) in Form eines sich in Längsrichtung des Längslenkers (13) erstreckenden Schalenelements des wenigstens einen Montageabschnitts (17) miteinander verbunden, insbesondere verschweißt, werden und
- bei dem, vorzugsweise, wenigstens zwei Blechelemente (16) in Form der Schalenelemente mehrerer Montageabschnitte (17) des Achselements (14) mit einem sich in Längsrichtung des Längslenkers (13) erstreckenden, insbesondere aus einem Blech gebildeten, Untergurt (24) und/oder Obergurt (25) verbunden, insbesondere verschweißt, werden.

13. Verfahren nach einem der Ansprüche 10 bis 12,
- bei dem wenigstens ein Blechelement (16) eines Montageabschnitts (17) des Achselements (14) in Form eines Schalenelements, der Untergurt (24) und/oder der Obergurt (25) mit einer Buchse (22) zur Montage des Längslenkers (13) an einer Konsole des Chassis (8) des Nutzfahrzeugs (1) verbunden, insbesondere verschweißt, wird.

14. Verfahren nach einem der Ansprüche 10 bis 13,
- bei dem zwei gleichartige Längslenker (13) zum Verbinden mit jeweils einer Federeinrichtung beabstandet voneinander an dem Achselement (14) montiert werden.
